# FASCICULE DE BREVET EUROPEEN

(11) **EP 2 113 676 B1**
(45) Date de publication et mention de la délivrance du brevet: **03.10.2018**
(21) Numéro de dépôt: 09158619.8
(22) Date de dépôt: 23.04.2009
(51) Int. Cl.: F16F 1/38, F16F 1/387, F16F 13/10

(54) **Dispositif antivibratoire, système antivibratoire comprenant un tel dispositif et procédé de fabrication.**
Schwingungsdämpfungsvorrichtung, System mit einer solchen Vorrichtung und Herstellungsverfahren
Antivibration device, antivibration system comprising such a device and manufacturing process

(30) Priorité: 29.04.2008 FR 0852900
(43) Date de publication de la demande: 04.11.2009
(73) Titulaire: Hutchinson, 75008 Paris (FR)
(72) Inventeur: Visage, Hervé, 28200, Chateaudin (FR); Petit, Pascal, 45190, Beaugency (FR); Chenais, Gilles, 28200, Marboue (FR); Loriot, Patrick, 28230, Epernon (FR)
(74) Mandataire: Cabinet Plasseraud

(56) Documents cités:
- EP-A- 1 816 371
- EP-A1- 1 878 599
- DE-A1-102004 056 884
- DE-B3- 10 249 387
- FR-A- 2 810 712
- GB-A- 2 417 542

## Description

La présente invention est relative aux dispositifs antivibratoires, aux systèmes antivibratoires comprenant de tels dispositifs et à leurs procédés de fabrication.

Plus particulièrement, l'invention concerne un dispositif antivibratoire comprenant :
- un support antivibratoire comportant des première et deuxième armatures rigides reliées entre elles par un corps en élastomère adapté pour supporter une charge selon une première direction,
- et un capot limiteur adapté pour se fixer sur un organe de réception, ledit capot limiteur étant adapté pour limiter des débattements de la première armature au moins selon la première direction et selon une deuxième direction perpendiculaire à la première direction, la deuxième armature étant reliée au capot limiteur par au moins une liaison mécanique adaptée pour solidariser ladite deuxième armature au capot limiteur et le capot limiteur est adapté pour se fixer sur l'organe de réception en serrant la deuxième armature contre ledit organe de réception.

Le document DE-B3-102 49 387 décrit un tel dispositif antivibratoire, dans lequel la deuxième armature est une plaque de base qui est reliée au capot limiteur par des pattes serties.

Par ailleurs, le document GB-A-2417542 décrit un dispositif antivibratoire dans lequel une unité hydroélastique est montée en force dans un capot limiteur.

La présente invention a pour but de perfectionner les dispositifs antivibratoires de ce type, notamment pour simplifier leur processus de fabrication et limiter leur coût.

A cet effet, selon l'invention, un dispositif antivibratoire du genre en question est caractérisé en ce que la deuxième armature est clipsée au capot limiteur par emboîtement dans la première direction.

Grâce à ces dispositions, le support moteur peut être pré-assemblé au capot limiteur de façon extrêmement simple, par emboîtement, puis le cas échéant stocké et transporté en l'état avant que le capot limiteur ne soit fixé sur l'organe de réception (par exemple une partie de caisse de véhicule). La clipsage susmentionné constitue une fixation provisoire de la deuxième armature sur le capot limiteur, l'assemblage définitif entre le capot limiteur et le support antivibratoire n'étant obtenu que lors du montage du capot limiteur sur l'organe de réception, après quoi la deuxième armature est serrée entre le capot limiteur et ledit organe de réception.

On simplifie ainsi le processus de fabrication initial du dispositif antivibratoire, sans compliquer pour autant son assemblage final qui peut avoir lieu par exemple lors du montage sur un véhicule.

Selon l'invention, le dispositif antivibratoire comprend les dispositions suivantes:
- le support antivibratoire est un support hydraulique ayant un circuit hydraulique étanche et rempli de liquide, comprenant :
   - une chambre de travail délimitée par le corps en élastomère,
   - une chambre de compensation délimitée par une paroi souple en élastomère solidaire de la deuxième armature,
   - et un passage étranglé reliant entre elles la chambre de travail et la chambre de compensation ;
- la deuxième armature a une forme extérieure sensiblement cylindrique de révolution, d'axe parallèle à la première direction (Z), comportant deux parties saillantes latérales diamétralement opposées dans la deuxième direction.

Dans divers modes de réalisations du dispositif antivibratoire selon l'invention, on peut éventuellement avoir recours en outre à l'une et/ ou à l'autre des dispositions suivantes:
- la deuxième armature comporte au moins un ergot latéral engagé dans un évidement ménagé dans le capot limiteur ;
- la deuxième armature est en matière plastique (la réalisation en matière plastique facilite le clipsage) ;
- le capot limiteur présente une forme en U inversé, comprenant au moins une paroi supérieure recouvrant la première armature et deux ailes latérales disposées de part et d'autres du support antivibratoire et clipsées à la deuxième armature (cette forme en U assure une souplesse qui facilite le clipsage de la deuxième armature sur le capot limiteur) ;

- le capot limiteur comporte en outre deux pattes qui prolongent les ailes latérales à l'opposé l'une de l'autre, lesdites pattes étant pourvues de moyens de fixation adaptés pour se fixer sur ledit organe de réception ;
- les pattes du capot limiteur recouvrent des talons appartenant à la deuxième armature ;
- les pattes du capot limiteur comportent des ressauts recouvrant des talons de la deuxième armature, la deuxième armature et lesdites pattes présentant des faces inférieures coplanaires.

Par ailleurs, l'invention a également pour objet un système antivibratoire comprenant un dispositif antivibratoire tel que défini ci-dessus et un organe de réception sur lequel est fixé le capot limiteur, le capot limiteur serrant la deuxième armature contre l'organe de réception dans la première direction. L'organe de réception en question peut être notamment une partie de caisse de véhicule.

L'invention a également pour objet un procédé de fabrication d'un système antivibratoire tel que défini ci-dessus, comprenant une étape de montage préliminaire dans laquelle la deuxième armature du support antivibratoire est clipsée sur le capot limiteur, et une étape de montage final dans laquelle le capot limiteur est fixé sur l'organe de réception en serrant la deuxième armature contre ledit organe de réception dans la première direction.

Enfin, l'invention a encore pour objet un dispositif antivibratoire comprenant :
- un support antivibratoire comportant des première et deuxième armatures rigides reliées entre elles par un corps en élastomère adapté pour supporter une charge selon une première direction,
- et un capot limiteur adapté pour se fixer sur un organe de réception, ledit capot limiteur étant adapté pour limiter des débattements de la première armature au moins selon la première direction et selon une deuxième direction perpendiculaire à la première direction, la deuxième armature étant reliée au capot limiteur par au moins une liaison mécanique adaptée pour solidariser ladite deuxième armature au capot limiteur et le capot limiteur étant adapté pour se fixer sur l'organe de réception en serrant la deuxième armature contre ledit organe de réception, caractérisé en ce que la deuxième armature est en matière plastique (la fixation provisoire de la deuxième armature sur le capot limiteur peut alors être obtenue par une opération simple telle que clipsage, emboîtement à force, soudure, collage, etc. L'assemblage définitif entre le capot limiteur et le support antivibratoire n'est obtenu que lors du montage du capot limiteur sur l'organe de réception, après quoi la deuxième armature est serrée entre le capot limiteur et ledit organe de réception.).

D'autres caractéristiques et avantages de l'invention apparaîtront au cours de la description suivante d'un de ses modes de réalisation, donné à titre d'exemple non limitatif, en regard du dessin joint.

Sur les dessins :
- les figures 1 et 2 sont des vues en perspective d'un dispositif antivibratoire selon une forme de réalisation de l'invention, vu dans deux directions opposées,
- la figure 3 est une vue en perspective d'un support antivibratoire appartenant au dispositif antivibratoire des figures 1 et 2, vu dans la même direction que la figure 2,
- et la figure 4 est une vue en coupe verticale d'un système antivibratoire comprenant le dispositif antivibratoire des figures 1 et 2 monté sur un organe de réception.

Sur les différentes figures, les mêmes références désignent des éléments identiques ou similaires.

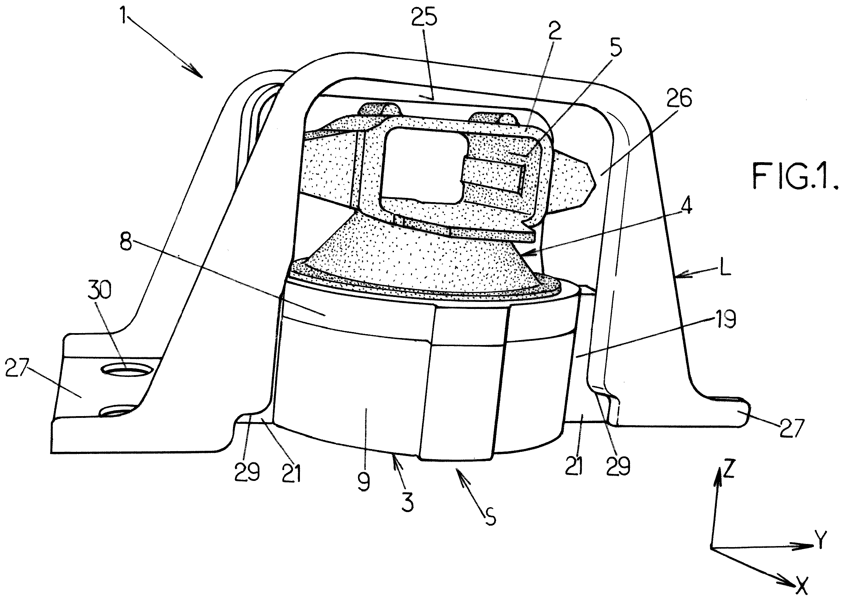

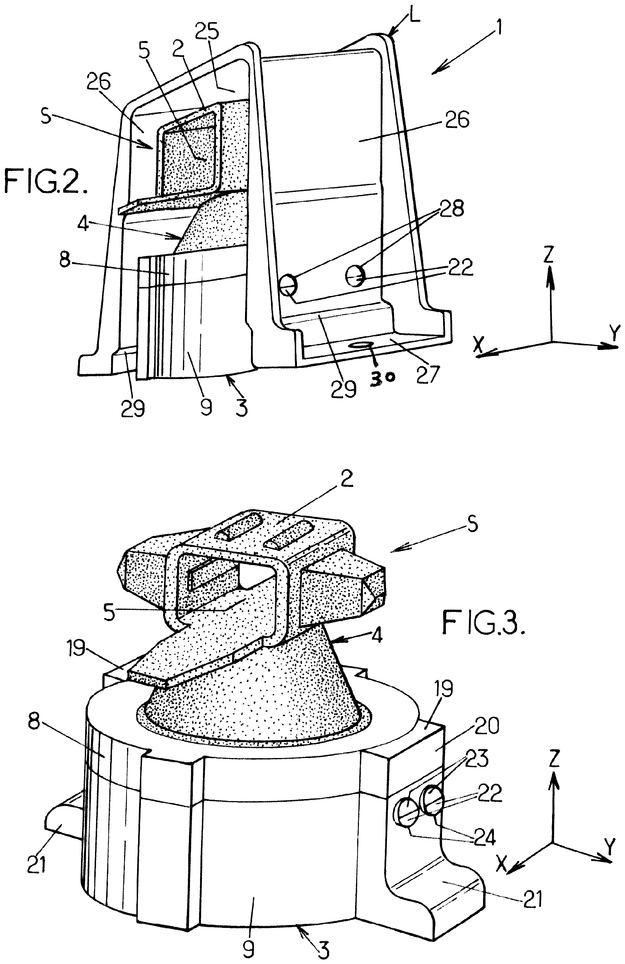

Comme représenté sur les figures 1 et 2, l'invention concerne un dispositif antivibratoire 1 qui comprend :
- d'une part un support antivibratoire hydraulique S comportant des première et deuxième armatures rigides 2, 3 reliées entre elles par un corps en élastomère 4 adapté pour supporter une charge selon une première direction Z, généralement verticale,
- et un capot limiteur L adapté pour se fixer sur un organe de réception 31 qui sera décrit ci-après, ce capot limiteur étant adapté pour limiter des débattements de la première armature 2 au moins selon la première direction Z et selon une deuxième direction Y perpendiculaire à la première direction Z.

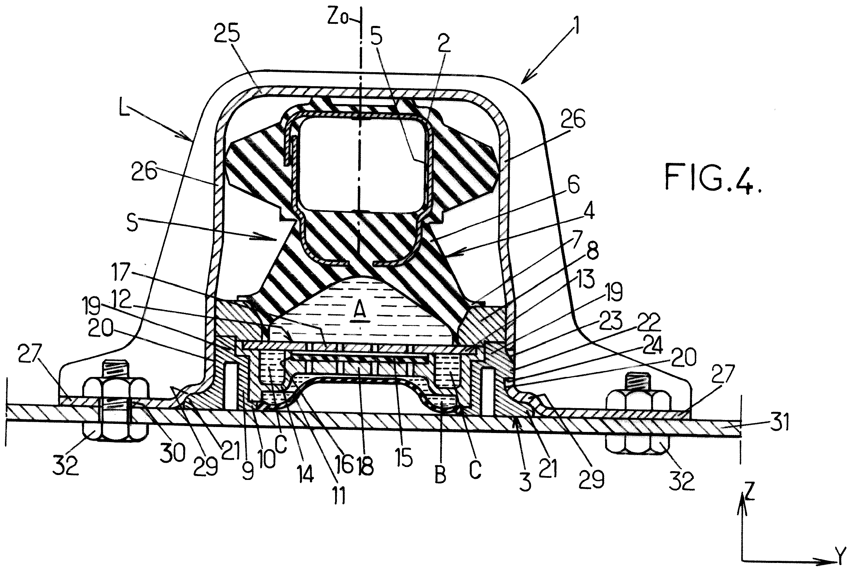

Comme représenté sur la figure 4, la première armature 2 peut, par exemple, être constituée par une pièce de tôle enroulée, au centre de laquelle est délimité un évidemment 5 selon une troisième direction X perpendiculaire aux première et deuxième directions Z et Y susmentionnées. Cet évidemment 5 peut recevoir par exemple, par emboîtement, un bras de liaison solidarisé avec un bloc motopropulseur de véhicule.

Par ailleurs, le corps en élastomère 4 peut présenter par exemple une forme de cloche s'étendant entre :
- un sommet 6 surmoulé et adhérisé sur la première armature 2 (en formant par exemple des bossages coopérant par butée avec le capot limiteur L)
- et une base annulaire 7 surmoulée et adhérisée sur la deuxième armature 3.

La deuxième armature 3, quant à elle, peut être réalisée notamment en matière plastique. Cette deuxième armature peut être réalisée par exemple en deux pièces assemblées par soudage ou autre :
- une bague supérieure 8 sur laquelle est surmoulée et adhérisée la base 7 du corps en élastomère,
- et une couronne inférieure 9.

L'extrémité inférieure de la couronne inférieure 9 comporte un rebord intérieur annulaire 10 qui est solidarisé avec une paroi souple en élastomère 11. La périphérie extérieure de cette paroi souple en élastomère 11 peut par exemple être surmoulée et adhérisée sur ledit rebord intérieur 10. La paroi souple en élastomère 11 ferme l'espace laissé libre à l'intérieur du rebord 10.

Une cloison rigide 12 est par ailleurs interposée entre la bague 8 et la couronne 9 de la deuxième armature, de sorte que cette cloison rigide 12 est solidaire de la deuxième armature 3. Dans l'exemple particulier représenté sur les dessins, la cloison rigide 12 peut être par exemple moulée en matière plastique et est constituée de deux pièces :
- d'une part une plaque supérieure 13, et
- d'autre part, une coque inférieure 14.

La cloison rigide 12 sert de séparation entre une chambre de travail A, délimitée par le corps en élastomère 4 et une chambre de compensation B, délimitée par la paroi souple en élastomère 11.

Ces deux chambres hydrauliques A et B communiquent entre elles par l'intermédiaire d'un passage étranglé C en forme d'arc de cercle, délimité par une gorge périphérique ménagée dans la coque inférieure 14 de la cloison 12. Le passage étranglé C communique avec la chambre de travail A par un orifice (non représenté) ménagé dans la plaque supérieure 13 et avec la chambre de compensation B par un orifice (non représenté) ménagé dans la coque inférieure 14. La chambre de travail A et la chambre de compensation B et le passage étranglé C constituent ainsi un circuit hydraulique étanche, rempli de liquide.

Le cas échéant, un clapet de découplage 15, constitué par exemple par une membrane en élastomère, peut également être disposé dans un logement 16 ménagé dans la coque inférieure 14, le clapet de découplage 15 étant interposé avec jeu entre deux grilles 17, 18 qui sont ménagées respectivement dans la plaque supérieure 13 et dans la coque inférieure 14 et qui communiquent respectivement avec la chambre de travail A et avec la chambre de compensation B.

Le fonctionnement du support antivibratoire hydraulique S est connu en soi et ne sera donc pas décrit en détail ici :
- le corps en élastomère 4 est adapté pour reprendre les charges axiales (notamment le poids du bloc autopropulseur) dans la première direction Z,
- les mouvements vibratoires entre les première et deuxième armatures 2, 3, à fréquence élevée et faible amplitude (par exemple les vibrations dues au fonctionnement du bloc motopropulseur et ayant une fréquence supérieure à 20 Hertz et une amplitude inférieure à quelques millimètres) sont filtrés par le clapet de découplage 15,
- les mouvements vibratoires de faible fréquence (par exemple inférieure à 20 Hertz) et de plus grande amplitude (par exemple supérieure à quelques millimètres), générés par exemple par le roulage du véhicule, donnent lieu à des transferts de liquide entre les chambres hydrauliques A, B, par l'intermédiaire du passage étranglé C.

La deuxième armature 3 peut présenter une forme extérieure par exemple sensiblement cylindrique de révolution, d'axe central Z0 parallèle à la première direction Z, comportant deux parties saillantes latérales 19 (voir les figures 1, 3 et 4) diamétralement opposées dans la direction Y. Ces parties saillantes 19 peuvent présenter chacune une face extérieure plane 20 dont la normale est orientée dans la direction Y, et la partie inférieure de chacune de ces parties saillantes 19 est prolongées vers l'extérieur, dans la direction Y, par un talon 21.

Comme représenté sur les figures 3 et 4, au moins une des parties saillantes 19 présente en outre, dans sa partie supérieure, au moins un ergot 22 faisant saillie radialement vers l'extérieur dans la direction Y.

Dans l'exemple particulier représenté sur les dessins, l'une des parties saillantes 19 comporte deux ergots 22 juxtaposés, tandis que l'autre partie saillante 19 ne comporte pas d'ergot 22. Chaque ergot 22 peut par exemple présenter une face supérieure 23 inclinée vers le bas et vers l'extérieur, et une face inférieure 24, sensiblement perpendiculaire à la direction Z.

Comme représenté sur les figures 1, 2 et 4, le capot limiteur L peut présenter par exemple une paroi supérieure 25 recouvrant la première armature 2 et deux ailes latérales parallèles 26 qui sont disposées perpendiculairement à la deuxième direction Y et qui encadrent l'ensemble du support antivibratoire S dans ladite deuxième direction Y, ces deux ailes latérales étant prolongées vers l'extérieur par deux pattes 27 horizontales qui s'étendent à l'opposé l'une de l'autre dans la direction Y.

Les ailes latérales 26 sont emboîtées dans la direction Z sur les faces extérieures 20 de parties saillantes 19 et sont pourvues d'évidements 28 disposés en correspondance avec les ergots 22 de la deuxième armature, de sorte que lesdits ergots viennent se clipser en pénétrant dans les évidements 28 lors de l'emboîtement du capot limiteur L sur la deuxième armature 3 du support antivibratoire.

Les pattes 27 du capot limiteur présentent en outre chacune, à sa jonction avec l'aile latérale 25 correspondante, un ressaut 29 qui recouvre le talon 21 correspondant de la deuxième armature. Les faces inférieures de la deuxième armature 3 et des pattes 27 sont disposées sensiblement dans un même plan.

Les pattes 27 sont en outre pourvues de moyens de fixation, tels que des trous 30 qui permettent de fixer le dispositif antivibratoire 1 sur un organe de réception 31 tel qu'une partie de caisse de véhicule (notamment un longeron de caisse), par exemple au moyen d'écrous 32 ou autres, comme représenté sur la figure 4.

Le système antivibratoire qui vient d'être décrit peut ainsi être assemblé en deux étapes :
- une étape de montage préliminaire et provisoire dans laquelle la deuxième armature 3 du support antivibratoire S est clipsée sur le capot limiteur L (après quoi ces deux pièces restent assemblées et peuvent être aisément stockées et/ou transportées),
- un étape de montage finale dans laquelle le capot limiteur L est fixé sur l'organe de réception 31 en serrant la deuxième armature 3 contre ledit organe de réception dans la direction Z, ce qui garantit alors une solidarisation définitive entre la deuxième armature 3, el capot limiteur L et l'organe de réception 31.

## Revendications

1. Dispositif antivibratoire comprenant :
- un **support antivibratoire** (S) comportant des **première et deuxième armatures (2, 3) rigides** reliées entre elles par un corps en élastomère (4) adapté pour supporter une charge selon une première direction (Z),
- et un **capot limiteur** (L) adapté pour se fixer sur un organe de réception (31), ledit capot limiteur étant adapté pour limiter des débattements de la première armature (2) au moins selon la première direction (Z) et selon une deuxième direction (Y) perpendiculaire à la première direction, la deuxième armature (3) étant reliée au capot limiteur (L) par au moins **une liaison mécanique** (22, 28) adaptée pour solidariser ladite deuxième armature au capot limiteur, le capot limiteur (L) étant adapté pour se fixer sur l'organe de réception (31) en serrant la deuxième armature (3) contre ledit organe de réception **caractérisé en ce que** la deuxième armature (3) est **clipsée** au capot limiteur par emboîtement dans la première direction (Z) dans lequel le support antivibratoire (S) est un **support hydraulique** ayant un circuit hydraulique étanche et rempli de liquide, comprenant :
- une chambre de travail (A) délimitée par le corps en élastomère (4),
- une chambre de compensation (B) délimitée par une paroi souple en élastomère (11) solidaire de la deuxième armature (3),
- et un passage étranglé (C) reliant entre elles la chambre de travail (A) et la chambre de compensation (B),
la deuxième armature ayant une forme extérieure sensiblement cylindrique de révolution, d'axe parallèle à la première direction (Z), comportant deux parties saillantes latérales (19) diamétralement opposées dans la deuxième direction (Y).

2. Dispositif antivibratoire selon la revendication 1, dans lequel la deuxième armature (3) comporte au moins un **ergot latéral** (22) engagé dans un évidement (28) ménagé dans le capot limiteur (L), pour clipser ladite deuxième armature (3) au capot limiteur (L) par engagement dans la première direction (Z).

3. Dispositif antivibratoire selon l'une quelconque des revendications précédentes, dans lequel la deuxième armature (3) est en **matière plastique.**

4. Dispositif antivibratoire selon l'une quelconque des revendications précédentes, dans lequel le **capot** limiteur (L) présente une **forme en U inversé,** comprenant au moins une paroi supérieure (25) recouvrant la première armature (2) et deux ailes latérales (26) disposées de part et d'autres du support antivibratoire (S) et clipsées à la deuxième armature (3).

5. Dispositif antivibratoire selon l'une quelconque des revendications précédentes, dans lequel le capot limiteur (L) comporte en outre **deux pattes** (27) qui prolongent les ailes latérales (26) à l'opposé l'une de l'autre, lesdites pattes (27) étant pourvues de moyens de fixation (30) adaptés pour se fixer sur ledit organe de réception (31).

6. Dispositif antivibratoire selon la revendication 5, dans lequel la deuxième armature (3) comprend des **talons** (21) s'étendant radialement vers l'extérieur, et dans lequel les pattes (27) du capot limiteur recouvrent lesdits talons (21) .

7. Dispositif antivibratoire selon la revendication 6, dans lequel les pattes (27) du capot limiteur comportent des **ressauts** (29) recouvrant les talons (21) de la deuxième armature, la deuxième armature (3) et lesdites pattes (27) présentant des faces inférieures coplanaires, adaptées pour venir en contact plan sur une portion dudit organe de réception (31).

8. **Système** antivibratoire comprenant un dispositif antivibratoire (1) selon l'une quelconque des revendications précédentes et un organe de réception (31) sur lequel est fixé le capot limiteur (L), le capot limiteur serrant la deuxième armature (3) contre l'organe de réception (31) dans la première direction (Z).

9. Système antivibratoire selon la revendication 8, dans lequel l'organe de réception (31) comprend une portion recouverte par le dispositif antivibratoire (1), ladite portion recouverte présentant une surface sensiblement plane, et dans lequel la deuxième armature (3) comprend des talons (21) s'étendant radialement vers l'extérieur, lesdits talons ayant une surface inférieure sensiblement plane, ladite surface inférieure s'appuyant sur ladite portion recouverte de l'organe de réception (31).

10. Système antivibratoire selon la revendication 8, dans lequel l'organe de réception (31) est une partie de caisse de véhicule.

11. **Procédé** de fabrication d'un système antivibratoire selon la revendication 8 ou la revendication 9, comprenant :
- une étape de montage préliminaire dans laquelle la deuxième armature (3) du support antivibratoire est clipsée sur le capot limiteur (L),
- et une étape de montage final dans laquelle le capot limiteur est fixé sur l'organe de réception (31) en serrant la deuxième armature (3) contre ledit organe de réception (31) dans la première direction (Z).

## Patentansprüche

1. Schwingungsdämpfungsvorrichtung aufweisend:
- einen Schwingungsdämpfungsträger (S) mit einer ersten und zweiten steifen Armierung (2, 3), die über einen Elastomerkörper (4) miteinander verbunden sind, zum Tragen einer Last in einer ersten Richtung (Z),
- und eine an einem Empfangselement (31) zu befestigende Begrenzungshaube (L) zum Begrenzen von Ausfederungen der ersten Armierung (2) zumindest in der ersten Richtung (Z) und in einer zur ersten Richtung senkrechten zweiten Richtung (Y), wobei die zweite Armierung (3) mit der Begrenzungshaube (L) über mindestens eine mechanische Verbindung (22, 28) verbunden ist, die geeignet ist, um die zweite Armierung und die Begrenzungshaube zusammenzuhalten, wobei die Begrenzungshaube (L) konfiguriert ist, um sich an dem Empfangselement (31) befestigen zu lassen und die zweiten Armierung (3) gegen das Empfangselement zu pressen,
**dadurch gekennzeichnet, dass** die zweite Armierung (3) sich durch Einsetzen in die erste Richtung (Z) an die Begrenzungshaube klipsen lässt,
wobei die Schwingungsdämpfungsvorrichtung (S) ein hydraulischer Träger mit einem flüssigkeitsgefüllten dichten Hydraulikkreis ist, aufweisend:
- eine Arbeitskammer (A), die von dem Elastomerkörper (4) begrenzt wird,
- eine Kompensationskammer (B), die von einer biegsamen Elastomerwand (11) begrenzt wird, die mit der zweiten Armierung (3) fest verbunden ist,
- und einen Drosselkanal (C), der die Arbeitskammer (A) und die Kompensationskammer (B) miteinander verbindet,
wobei die zweite Armierung eine im Wesentlichen rotationszylindrische äußere Form mit einer zur ersten Richtung (Z) parallelen Achse hat und zwei seitlich vorspringende Teile (19) aufweist, die sich in der zweiten Richtung (Y) diametral gegenüberliegen.

2. Schwingungsdämpfungsvorrichtung nach Anspruch 1, in welcher die zweite Armierung (3) mindestens eine seitliche Nase (22) aufweist, die in eine in der Begrenzungshaube (L) gebildete Aussparung (28) greift, um die zweite Armierung (3) durch Einsetzen in die erste Richtung (Z) an die Begrenzungshaube (L) zu klipsen.

3. Schwingungsdämpfungsvorrichtung nach einem der vorstehenden Ansprüche, in welcher die zweite Armierung (3) aus Kunststoff ist.

4. Schwingungsdämpfungsvorrichtung nach einem der vorstehenden Ansprüche, in welcher die Begrenzungshaube (L) eine umgekehrte U-Form aufweist, die mindestens eine die erste Armierung (2) bedeckende obere Wand (25) und zwei Seitenflügel (26) aufweist, die beiderseits des Schwingungsdämpfungsträgers (S) angeordnet sind und an die zweite Armierung (3) geklipst sind.

5. Schwingungsdämpfungsvorrichtung nach einem der vorstehenden Ansprüche, in welcher die Begrenzungshaube (L) ferner zwei Laschen (27) aufweist, die die Seitenflügel (23) auf einander entgegengesetzten Seiten verlängern, wobei die Laschen (27) als Befestigungsmittel (30) vorgesehen sind, um sich an dem Empfangselement (31) befestigen zu lassen.

6. Schwingungsdämpfungsvorrichtung nach Anspruch 5, in welcher die zweite Armierung (3) sich radial auswärts erstreckende Fersen (21) aufweist und in welcher die Laschen (27) der Begrenzungshaube die Fersen (21) bedecken.

7. Schwingungsdämpfungsvorrichtung nach Anspruch 6, in welcher die Laschen (27) der Begrenzungshaube Vorsprünge (29) aufweisen, die die Fersen (21) der zweiten Armierung bedecken, wobei die zweite Armierung (3) und die Laschen (27) koplanare untere Flächen haben, die geeignet sind, um in ebenen Kontakt an einem Abschnitt des Empfangselements (31) zu kommen.

8. Schwingungsdämpfungssystem, aufweisend eine Schwingungsdämpfungsvorrichtung (1) nach einem der vorstehenden Ansprüche und ein Empfangselement (31), an welchem die Begrenzungshaube (L) befestigt ist, wobei die Begrenzungshaube die zweite Armierung (3) in die erste Richtung (Z) gegen das Empfangselement (31) presst.

9. Schwingungsdämpfungssystem nach Anspruch 8, in welchem das Empfangselement (31) einen von der Schwingungsdämpfungsvorrichtung (1) bedeckten Abschnitt aufweist, wobei der bedeckte Abschnitt eine im Wesentlichen ebene Oberfläche hat, und in welchem die zweite Armierung (3) sich im Wesentlichen radial auswärts erstreckende Fersen (21) aufweist, wobei die Fersen eine im Wesentlichen ebene untere Fläche haben, wobei die untere Fläche sich auf den bedeckten Abschnitt des Empfangselements (31) stützt.

10. Schwingungsdämpfungssystem nach Anspruch 8, in welchem das Empfangselement (31) ein Teil einer Fahrzeugkarosserie ist.

11. Verfahren zur Herstellung eines Schwingungsdämpfungssystems nach Anspruch 8 oder Anspruch 9, aufweisend:
- einen Vormontageschritt, in welchem die zweite Armierung (3) des Schwingungsdämpfungsträgers an die Begrenzungshaube (L) geklipst wird,
- und einen Endmontageschritt, in welchem die Begrenzungshaube an dem Empfangselement (31) befestigt wird und die zweite Armierung (3) in die erste Richtung (Z) gegen das Empfangselement (31) presst.

## Claims

1. Anti-vibration device comprising:
- an anti-vibration support (S) comprising the first and second rigid frames (2, 3) connected to each other by an elastomer body (4) adapted to support a load along a first direction (Z),
- and a limiting cover (L) adapted to be attached on a receiving member (31), said limiting cover being adapted to limit displacements of the first frame (2) at least along the first direction (Z) and along a second direction (Y) perpendicular to the first direction, the second frame (3) being connected to the limiting cover (L) by at least one mechanical connection (22, 28) adapted to rigidly connect said second frame to the limiting cover, the limiting cover (L) being adapted to be attached on the receiving member (31) by clamping the second frame (3) against said receiving member, **characterised in that** the second frame (3) is clipped to the limiting cover by interlocking in the first direction (Z) wherein the anti-vibration support (S) is a hydraulic support having a sealed hydraulic circuit and filled with liquid, comprising:
- a work chamber (A) delimited by the elastomer body (4),
- a compensation chamber (B) delimited by the flexible elastomer wall (11) rigidly connected to the second frame (3),
- and a necked-down passage (C) connecting the work chamber (A) and the compensation chamber (B) to each other,
the second frame having a substantially cylindrical outer shape of revolution, of axis parallel to the first direction (Z), comprising two side protruding parts (19) diametrically opposite, in the second direction (Y).

2. Anti-vibration device according to claim 1, wherein the second frame (3) comprises at least one side lug (22) engaged in a recess (28) arranged in the limiting cover (L), to clip said second frame (3) to the limiting cover (L) by engagement in the first direction (Z).

3. Anti-vibration device according to any one of the preceding claims, wherein the second frame (3) is made of plastic material.

4. Anti-vibration device according to any one of the preceding claims, wherein the limiting cover (L) has an upside-down U-shape, comprising at least one upper wall (25) covering the first frame (2) and two side wings (26) disposed on either side of the anti-vibration support (S) and clipped to the second frame (3).

5. Anti-vibration device according to any one of the preceding claims, wherein the limiting cover (L) further comprises two tabs (27) which extend the side wings (26) opposite each other, said tabs (27 being provided with attachment means (30) adapted to be attached on said receiving member (31).

6. Anti-vibration device according to claim 5, wherein the second frame (3) comprises heels (21) extending radially towards the outside, and wherein the tabs (27) of the limiting cover, cover said heels (21).

7. Anti-vibration device according to claim 6, wherein the tabs (27) of the limiting cover comprise projections (29) covering the heels (21) of the second frame, the second frame (3) and said tabs (27) having lower coplanar faces, adapted to make flat contact on a portion of said receiving member (31).

8. Anti-vibration system comprising an anti-vibration device (1) according to any one of the preceding claims and a receiving member (31) on which is attached the limiting cover (L), the limiting cover clamping the second frame (3) against the receiving member (31) in the first direction (Z).

9. Anti-vibration system according to claim 8, wherein the receiving member (31) comprises a portion covered by the anti-vibration device (1), said covered portion having a substantially flat surface, and wherein the second frame (3) comprises heels (21) extending radially towards the outside, said heels having a substantially flat lower surface, said lower surface supporting the receiving member (31) on said covered portion.

10. Anti-vibration system according to claim 8, wherein the receiving member (31) is a vehicle body part.

11. Method for producing an anti-vibration system according to claim 8 or 9, comprising:
- a step of preliminary assembly, wherein the second frame (3) of the anti-vibration support is clipped on the limiting cover (L),
- and a step of final assembly, wherein the limiting cover is attached on the receiving member (31) by clamping the second frame (3) against said receiving member (31) in the first direction (Z).
